Europäisches Patentamt

European Patent Office

Office européen des brevets

(11) Numéro de publication : **0 068 911**
**B1**

# (12) FASCICULE DE BREVET EUROPÉEN

(45) Date de publication du fascicule du brevet :
07.08.85

(51) Int. Cl.⁴ : **B 62 M   9/12**

(21) Numéro de dépôt : 82400838.7

(22) Date de dépôt : 06.05.82

(54) **Mécanisme de guidage et d'actionnement, notamment pour dérailleur de bicyclette.**

(30) Priorité : 17.06.81 FR 8111974

(43) Date de publication de la demande :
05.01.83 Bulletin 83/01

(45) Mention de la délivrance du brevet :
07.08.85 Bulletin 85/32

(84) Etats contractants désignés :
BE DE GB IT LU NL

(56) Documents cités :
FR-A- 1 085 622
FR-A- 2 153 647
GB-A-   610 582
US-A- 4 223 562

(73) Titulaire : HURET ET SES FILS Société dite:
60 Avenue Félix Faure
F-92000 Nanterre (FR)

(72) Inventeur : Coue, Maurice Emmanuel Louis
6 Résidence du Vieux Pults
F-78810 Feucherolles (FR)

(74) Mandataire : Moncheny, Michel et al
c/o Cabinet Lavoix 2 Place d'Estienne d'Orves
F-75441 Paris Cedex 09 (FR)

Jouve, 18, rue St-Denis, 75001 Paris, France

## Description

La présente invention concerne les mécanismes de guidage et d'actionnement pouvant être utilisés, notamment bien que non exclusivement, dans des dérailleurs de bicyclettes, qu'il s'agisse de dérailleurs de pédalier ou de dérailleurs arrière.

On sait qu'un tel dérailleur comprend un organe mobile de guidage ou de déplacement de la chaîne relié à un organe de support par deux biellettes parallèles, cet ensemble constituant un parallélogramme articulé. Sous l'effet de la traction d'un câble ou autre organe d'actionnement, l'organe mobile est déplacé en translation par rapport au support fixe, da façon à guider la chaîne d'un plateau de pédalier à l'autre ou d'un pignon de roue libre à un autre.

Un tel mécanisme, du fait de la présence de deux biellettes et de quatre axes d'articulation est de construction relativement compliquée.

On connaît par ailleurs (FR-A-2 153 647) un mécanisme de commande de dérailleur avant dans lequel l'une des biellettes est remplacée par une came en arc de cercle sur laquelle se déplace un galet porté par la chape de guidage de la chaîne. Cependant, dans un tel agencement, le guidage du galet n'est pas positif car ce galet doit être appliqué contre la came par un ressort et cela peut nuire à la précision de la commande. De plus, le galet peut se dégager de la came, aux extrémités de celle-ci.

Le but de cette invention est de proposer un mécanisme fiable et précis dont la construction et le montage soient simplifiés et le prix de revient par conséquent abaissé.

L'invention a donc pour objet un mécanisme de guidage et d'actionnement, notamment pour dérailleur de bicyclette, du type de celui décrit dans FR-A-2 153 647, c'est-à-dire comprenant un organe de support, un organe mobile relié à cet organe de support de façon à pouvoir être déplacé en translation par rapport à ce dernier, au moyen d'un organe d'actionnement, l'organe de support et l'organe mobile étant articulés chacun autour d'un axe sur un corps intermédiaire, les deux axes d'articulation étant parallèles entre eux, et est caractérisée en ce que le corps intermédiaire délimite deux logements parallèles orientés orthogonalement à la direction des deux axes précités et dans lesquels sont montés coulissants deux poussoirs dont les extrémités sont respectivement en contact avec deux surfaces parallèles délimitées, l'une sur l'organe mobile et l'autre sur l'organe fixe.

Suivant d'autres caractéristiques :

— les deux logements délimités dans le corps intermédiaire sont disposés symétriquement de part et d'autre d'un plan contenant les deux axes d'articulation de ce corps sur l'organe de support et sur l'organe mobile ;

— les surfaces avec lesquelles les poussoirs sont en contact sont constituées ou revêtues d'un matériau anti-friction ;

— les logements sont de préférences cylindriques, de même que les poussoirs dont les extrémités ont des formes arrondies.

L'invention va être décrite plus en détail ci-dessous en se référant au dessin annexé, donné uniquement à titre d'exemple et sur lequel :

la Figure 1 est une vue en partie en élévation et en partie en coupe d'un mécanisme suivant l'invention appliqué à un dérailleur de pédalier ;

la Figure 2 est une vue en élévation de ce même mécanisme dans une autre position d'utilisation ;

la Figure 3 est une vue en coupe suivant la ligne 33-3 de la Figure 1 ;

la Figure 4 est une vue en partie en élévation et en partie en coupe d'un mécanisme suivant l'invention appliqué à un dérailleur arrière ; et

la Figure 5 est une vue en élévation de ce même mécanisme dans une autre position d'utilisation.

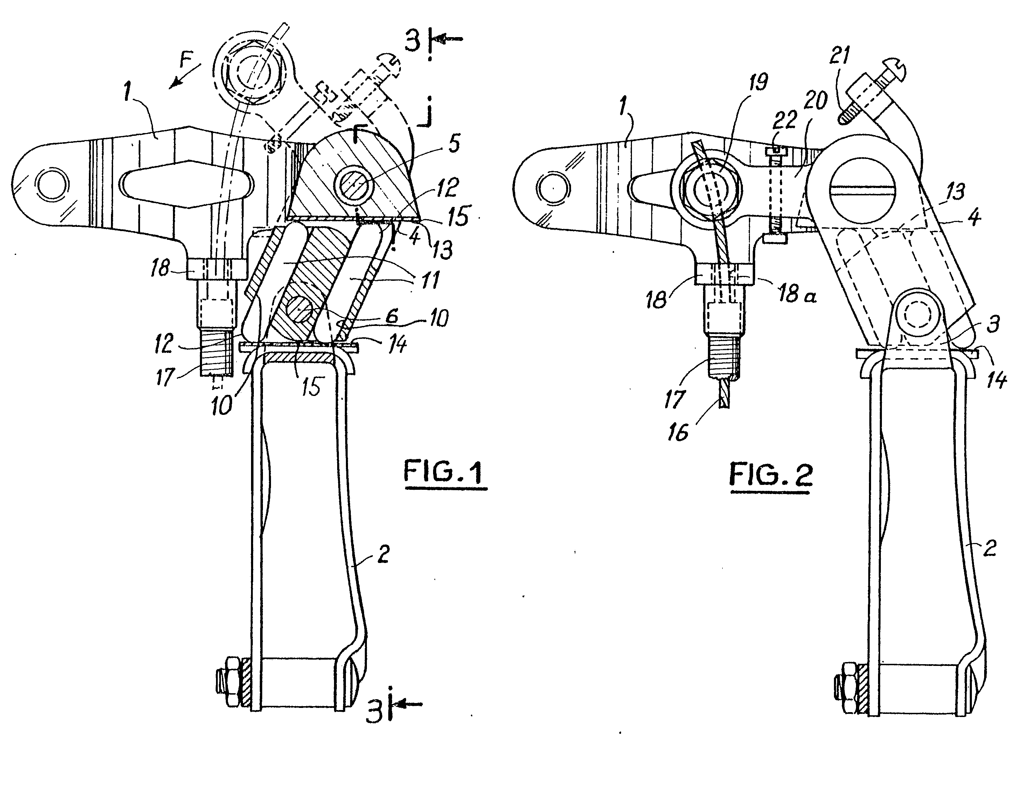

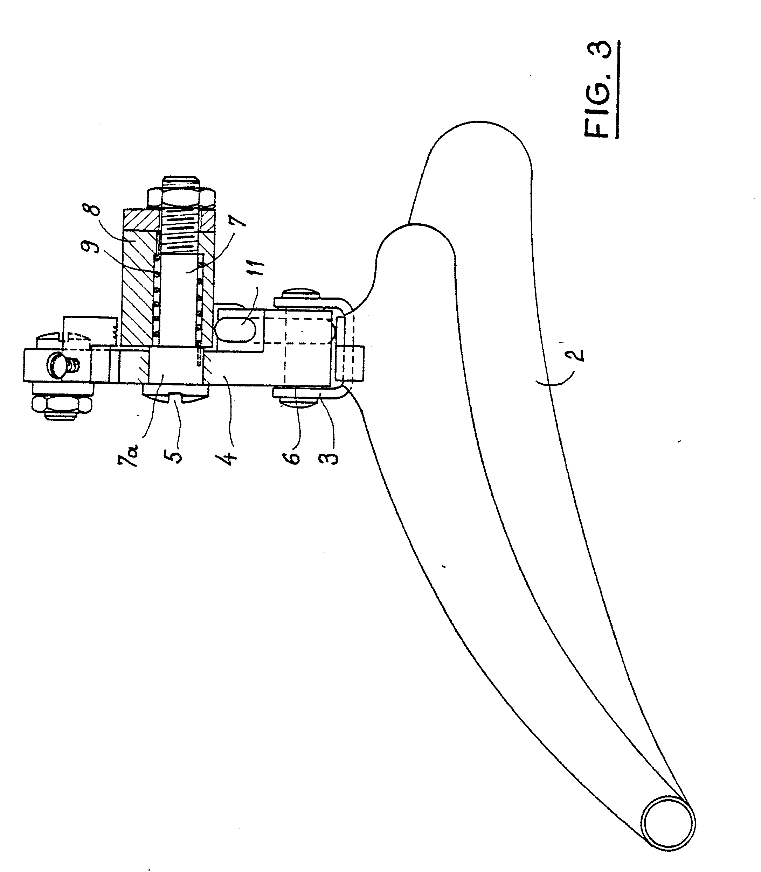

Dans le mode de réalisation représenté aux Figures 1 à 3, le dérailleur de pédalier représenté comprend un organe de support 1 constitué par un collier destiné à être fixé sur un cadre de bicyclette. L'organe mobile de guidage et de déplacement de la chaîne (non représentée) est constitué par une chape ou une fourchette 2 articulée à sa partie supérieure, au moyen d'un étrier 3, sur un corps intermédiaire 4 lui-même articulé sur le support fixe. Les deux axes d'articulation 5, 6 sont parallèles entre eux. Comme on le voit sur la Figure 3, l'axe 5 d'articulation entre le corps intermédiaire et le collier fixe est constitué par une portée 7ª d'une vis 7 qui traverse un logement 8 solidaire du collier et dans lequel est reçu un ressort de rappel 9 qui tend à ramener le mécanisme dans sa position de la Figure 1.

Le corps intermédiaire comporte deux logements parallèles 10 constitués ici par des alésages cylindriques et disposés symétriquement par rapport à un plan contenant les deux axes d'articulation du corps intermédiaire sur l'organe mobile et le support, respectivement. Les axes de ces deux logements sont contenus dans un plan perpendiculaire aux axes 5 et 6.

Dans ces logements sont montés coulissants deux poussoirs identiques 11 dont les extrémités 12 arrondies sont en contact avec deux surfaces d'appui parallèles 13, 14 ménagées respectivement l'une sur le support fixe et l'autre sur l'organe mobile. Ces deux surfaces parallèles sont de préférence revêtues d'une couche 15 de matériau anti-friction ou bien sont réalisées directement en une matière autorisant un glissement avec un frottement minimal des poussoirs le long de ces surfaces.

Le mécanisme est complété par des moyens d'actionnement constitués ici par un câble 16 dont la gaine 17 est en appui contre une patte 18 du collier et dont le câble proprement dit, s'étendant à travers un orifice 18ª de cette patte est fixé sur un serre-câble 19 porté par un bras de levier 20 solidaire du corps intermédiaire.

Il est également prévu deux butées réglables 21, 22 munies de moyens de freinage et qui sont destinées à déterminer les deux positions extrêmes du mécanisme. De telles butées sont classiques dans cette technique et n'ont donc pas à être décrites en détail.

Le fonctionnement de ce mécanisme est le suivant : en supposant qu'il occupe la position de la Figure 1 vers laquelle il est rappelé par le ressort 9, si une traction est exercée sur le câble d'actionnement, le corps intermédiaire et le levier 20 basculent dans le sens indiqué par la flèche F. Ce mouvement de basculement est guidé par les deux poussoirs 11 en appui sur les surfaces 13 et 14, le mécanisme prenant finalement la position représentée sur la Figure 2.

Ce mécanisme assure donc le guidage en translation de la fourchette par rapport au support fixe, ce qui correspond bien à l'objectif recherché. Par ailleurs, sa construction est particulièrement simple puisqu'il ne comporte que deux axes d'articulation au lieu de quatre et un seul organe intermédiaire au lieu de deux. Cet organe intermédiaire et les deux poussoirs sont de construction particulièrement simple. Par ailleurs et ceci est essentiel, le montage de ce mécanisme est très simplifié par rapport à celui de la technique antérieure et peut être aisément automatisé, ce qui apporte une économie sensible au niveau de sa fabrication.

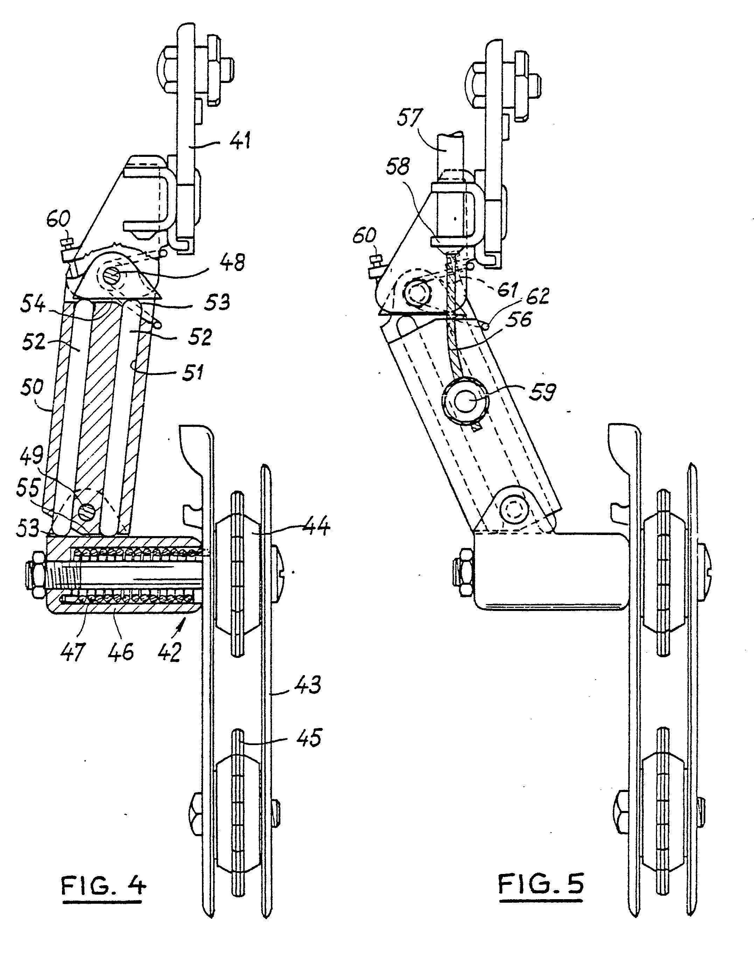

La même invention est appliquée dans le mode de réalisation des Figures 4 et 5 à un dérailleur arrière comprenant une plaque support 41 destinée à être fixée sur la patte de cadre de la fourche arrière d'une bicyclette, et un organe mobile 42 de guidage de la chaîne constitué de façon classique par une chape 43 sur laquelle sont montés rotatifs un galet guide-chaîne 44 et un galet 45 de tension de chaîne. De façon également classique, cette chape est articulée sur une pièce 46 à l'intérieur de laquelle est disposé un ressort 47 de tension de chaîne.

Comme dans l'exemple précédent, l'organe mobile 42 et l'organe de support 41 sont tous deux articulés autour de deux axes parallèles 48, 49 sur un corps intermédiaire 50 dans lequel sont délimités deux logements 51 dans lesquels coulissent deux poussoirs parallèles 52. Ces deux poussoirs dont les extrémités 53 sont arrondies sont en appui contre deux surfaces également parallèles 54, 55 ménagées sur le support et sur l'organe mobile, respectivement, et revêtues d'un matériau anti-friction.

Il est prévu des moyens d'actionnement constitués par exemple par un câble 56 dont la gaine 57 prend appui sur une patte 58 solidaire du support fixe et dont le câble proprement dit est fixé sur un serre-câble 59 porté par le corps intermédiaire.

Il est également prévu de façon classique deux butées réglables 60, 61 déterminant les positions de fin de course du mécanisme, ces positions étant représentées respectivement aux Figures 4 et 5, et un ressort de rappel 62.

Il est inutile de décrire le fonctionnement de ce dérailleur arrière qui est tout à fait classique et les avantages énumérés à propos du premier mode de réalisation valent bien entendu pour cette variante.

Il est clair que de nombreuses autres variantes de construction peuvent intervenir dans l'application d'un tel mécanisme, que ce soit à un dérailleur ou à d'autres applications. Il en est ainsi en particulier de la position relative du corps intermédiaire par rapport au support fixe et à l'organe mobile, et de la position et de l'orientation de ses axes d'articulation. Par ailleurs, la forme des logements et des poussoirs peut également faire l'objet de nombreuses modifications.

## Revendications

1. Mécanisme de guidage et d'actionnement, notamment pour dérailleur de bicyclette, comprenant un organe de support (1), un organe mobile (2) relié à cet organe de support de façon à pouvoir être déplacé en translation par rapport à ce dernier, au moyen d'un organe d'actionnement, l'organe de support (1) et l'organe mobile (2) étant articulés chacun autour d'un axe (5, 6) sur un corps intermédiaire, les deux axes d'articulation étant parallèles entre eux, caractérisé en ce que le corps intermédiaire (4) délimite deux logements parallèles (10) orientés orthogonalement à la direction des deux axes précités et dans lesquels sont montés coulissants deux poussoirs (11) dont les extrémités (12) sont respectivement en contact avec deux surfaces parallèles (13, 14) délimitées, l'une sur l'organe mobile et l'autre sur l'organe fixe.

2. Mécanisme suivant la revendication 1, caractérisé en ce que les deux logements délimités (10) dans le corps intermédiaire (4) sont disposés symétriquement de part et d'autre d'un plan contenant les deux axes d'articulation (5, 6) de ce corps sur l'organe de support et sur l'organe mobile.

3. Mécanisme suivant la revendication 1, caractérisé en ce que les surfaces (13, 14) avec lesquelles les poussoirs (11) sont en contact sont constituées ou revêtues d'un matériau anti-friction (15).

4. Mécanisme suivant la revendication 1, caractérisé en ce que les logements (10) sont de préférence cylindriques, de même que les poussoirs (11) dont les extrémités (12) ont des formes arrondies.

5. Mécanisme suivant l'une quelconque des revendications 1 à 4, caractérisé en ce que le corps intermédiaire (4) est solidaire d'un levier (20) sur lequel est fixé l'organe d'actionnement (16).

6. Mécanisme suivant l'une quelconque des revendications 1 à 4, caractérisé en ce que l'organe d'actionnement (56) est fixé directement sur le corps intermédiaire (50)

## Claims

1. A guiding and actuating mechanism, in particular for a bicycle derailleur, comprising a support member (1), a movable member (2) connected to the support member in such manner as to be movable in translation relative to the support member by an actuating member, the support member (1) and the movable member (2) being each pivoted on an intermediate body to pivot about a respective pivot pin (5, 6), the two pivot pins being parallel to each other, characterized in that the intermediate body (4) defines two parallel cavities (10) which extend in a direction orthogonal to the orientation of said two pivot pins and in which cavities are slidably mounted two push-members (11) whose ends (12) are respectively in contact with two parallel surfaces (13, 14), one of which surfaces is defined on the movable member whereas the other surface is defined on the fixed member.

2. A mechanism according to claim 1, characterized in that the two cavities (10) defined in the intermediate body (4) are disposed symmetrically on each side of a plane containing the two pivot pins (5, 6) connecting the intermediate body to the support member and to the movable member.

3. A mechanism according to claim 1, characterized in that the surfaces (13, 14) with which the push-members (11) are in contact, are constituted by, or coated with, an anti-friction material (15).

4. A mechanism according to claim 1, characterized in that the cavities (10) are preferably cylindrical, as well as the push-members (11) which have rounded ends (12).

5. A mechanism according to any one of the claims 1 to 4, characterized in that the intermediate body (4) is rigid with a lever (20) on which the actuating member (16) is fixed.

6. A mechanism according to any one of the claims 1 to 4, characterized in that the actuating member (56) is directly fixed to the intermediate body (50).

**Patentansprüche**

1. Einrichtung zum Führen und Betätigen insbesondere für eine Fahrrad-Kettenschaltung, umfassend ein Stützteil (1), ein an diesem Stützteil derart beweglich angeordnetes Teil (2), daß es mittels eines Betätigungsorgans in einer Translationsbewegung gegenüber dem letzteren verstellbar ist, wobei das Stützteil (1) und das bewegliche Teil (2) jeweils um eine Schwenkachse (5, 6) schwenkbar mit einem Zwischenteil verbunden sind und die beiden Schwenkachsen parallel zueinander liegen, dadurch gekennzeichnet, daß das Zwischenstück zwei parallele Ausnehmungen (10) aufweist, welche senkrecht zur Richtung der beiden Schwenkachsen ausgerichtet sind und in denen jeweils ein Stößel (11) verschiebbar aufgenommen ist, deren Enden (12) jeweils gegen zwei parallele Flächen (13, 14) anliegen, deren eine an dem beweglichen Teil (2) und deren andere am festen Stüzteil (1) ausgebildet ist.

2. Einrichtung nach Anspruch 1, dadurch gekennzeichnet, daß die beiden im Zwischenstück (4) ausgebildeten Ausnehmungen (10) symmetrisch beiderseits einer Ebene angeordnet sind, welche die beiden Schwenkachsen (5, 6) des Zwischenstückes (4) mit den Stützteil (1) und dem beweglichen Teil (2) enthält.

3. Einrichtung nach Anspruch 1, dadurch gekennzeichnet, daß die Flächen (13, 14), gegen welche die Stößel (11) anliegen, aus einem reibungsarmen Material (15) bestehen oder beschichtet sind.

4. Einrichtung nach Anspruch 1, dadurch gekennzeichnet, daß die Ausnehmungen (10) vorzugsweise zylindrisch sind, ebenso wie die Stößel (11), wobei deren Enden (12) jeweils eine abgerundete Form haben.

5. Einrichtung nach einem der Ansprüche 1 bis 4, dadurch gekennzeichnet, daß das Zwischenstück (4) mit einem Hebel (20) fest verbunden ist, an welchem das Betätigungsorgan (16) angreift.

6. Einrichtung nach einem der Ansprüche 1 bis 4, dadurch gekennzeichnet, daß das Betätigungsorgan (56) unmittelbar am Zwischenstück (50) befestigt ist.

FIG.1

FIG.2

0 068 911

FIG. 3

0 068 911

FIG. 4

FIG. 5